# EUROPEAN PATENT APPLICATION

(11) **EP 4 804 106 A1**
(43) Date of publication of application: **09.09.2026**
(21) Application number: 23957204.3
(22) Date of filing: 01.11.2023
(51) Int. Cl.: G06Q 40/00, G06Q 40/04

(54) **BLOCKCHAIN-BASED GROUP TRANSACTION METHOD AND APPARATUS, AND COMPUTER-READABLE STORAGE MEDIUM**

(71) Applicant: Shenzhen Xin-An Digital Technology Co., Ltd., Shenzhen City, Guangdong 518057 (CN)
(72) Inventor: ZHOU, Caiting, Shenzhen, Guangdong 518057 (CN); TIAN, Baoqiang, Shenzhen, Guangdong 518057 (CN); WANG, Liyan, Shenzhen, Guangdong 518057 (CN)
(74) Representative: Metida
(86) International application number: PCT/CN2023/129095
(87) International publication number: WO 2025/091331

(57) **Abstract**

A group transaction method based on a blockchain network is provided. A group includes a plurality of group participants registered with transmission nodes of a transmission network and a group receiver deployed on a designated transmission node. The method comprises: transmitting, by the plurality of group participants, transaction requests to the group receiver via the transmission network; performing, by the group receiver, global consistent ordering on group information received by the group receiver, and publishing, by the group receiver, the group information to the group based on a global consistent ordering, wherein the group information comprises the transaction requests and transaction matching results; obtaining, by a group executor among the plurality of group participants, the transaction requests published to the group, and executing, by the group executor, a transaction matching program based on the global consistent ordering to generate the transaction matching results.

## Description

### TECHNICAL FIELD

The present application relates to the field of online transactions, and in particular to a group transaction method, system, and apparatus based on a blockchain network, and a computer-readable storage medium.

### BACKGROUND

This section is intended to provide background or context for embodiments of the present disclosure as set out in the appended claims. The illustrations in this section are not admitted to be prior art.

A blockchain is a chained data structure in which data are organized into blocks and linked in chronological order, and a distributed ledger in which data are ensured to be tamper-resistant and non-forgeable through cryptographic techniques.

At present, technologies related to digital/crypto assets have been increasingly developed and improved, and online transactions based on blockchain are becoming more prevalent. However, such blockchain-based online transactions generally have a high access threshold, and, compared with traditional centralized financial infrastructures, suffer from lower transaction efficiency and higher transaction costs.

For example, in conventional centralized exchange (CEX) technologies, users custody their digital assets with a centralized exchange, and the exchange platform performs matching and execution of transaction orders based on an order book. After completion of a transaction, the users transfer assets from the custodial platform to their own wallet accounts. However, such a scheme suffers from relatively low transaction security and privacy. As another example, in decentralized exchange (DEX) technologies, users rely on smart contracts on a blockchain, rather than a centralized trading platform, to conduct digital asset transactions. In such arrangements, transaction orders are matched by implementing an automated market maker protocol or an order book model within the smart contract, and transaction settlement is completed on-chain. Although such a scheme provides relatively high security and privacy, it suffers from relatively low transaction speed, relatively high transaction costs, and relatively poor usability.

Accordingly, there is a need for a technical solution that provides an online transaction scheme capable of balancing security and trustworthiness while also achieving low cost and ease of use.

### SUMMARY

In view of the above problems in the prior art, the present disclosure provides a group transaction method, system, and apparatus based on a blockchain network, and computer-readable storage medium. By adopting the method, system, apparatus, and computer-readable storage medium, the above problems can be effectively addressed.

The present disclosure provides the following solutions.

In a first aspect, a group transaction method based on a blockchain network is provided, wherein a group comprises a plurality of group participants registered with one or more transmission nodes of a transmission network, and a group receiver deployed at a designated transmission node of the transmission network, and the group transaction method comprises:
transmitting, by the plurality of group participants, transaction requests to the group receiver via the transmission network;
performing, by the group receiver, global consistent ordering on group information received by the group receiver, and publishing, by the group receiver, the group information to the group based on a global consistent ordering, wherein the group information comprises the transaction requests and transaction matching results;
obtaining, by a group executor among the plurality of group participants, the transaction requests published to the group, executing, by the group executor, a transaction matching program based on the global consistent ordering to generate the transaction matching results, and transmitting, by the group executor, the transaction matching results to the group receiver via the transmission network; and
obtaining, by the plurality of group participants, the transaction matching results published to the group, and performing, by the plurality of group participants, transaction settlement on the blockchain network based on the transaction matching results.

In an embodiment of the present disclosure, performing, by the group receiver, the global consistent ordering on the group information comprises:
performing, by the group receiver, the global consistent ordering on the group information based on a consistency ordering method that is published to all of the plurality of group participants.

In an embodiment of the present disclosure, the group transaction method further comprises:
verifying, by the plurality of group participants, the global consistent ordering based on timestamps carried in the group information;
wherein the timestamps are generated in the transmission network based on time points at which the group information is transmitted.

In an embodiment of the present disclosure, performing, by the group receiver, the global consistent ordering on the group information comprises:
sorting, by the group receiver, the received group information according to time points at which the group information arrives at the designated transmission node.

In an embodiment of the present disclosure, performing, by the group receiver, the global consistent ordering on the group information further comprises:
in response to the time points at which the group information arrives at the designated transmission node being identical, sorting, by the group receiver, the group information by comparing hash values of the group information.

In an embodiment of the present disclosure, performing, by the group receiver, the global consistent ordering on the group information further comprises:
defining, by the group receiver, a plurality of time periods at intervals of a predetermined duration;
for each of the plurality of time periods, performing, by the group receiver, a hash computation on all transaction requests arriving at the group receiver within the time period to obtain hash values; and
for each of the plurality of time periods, performing, by the group receiver, the global consistent ordering on group information received within the time period based on hash values of the transaction requests received within the time period.

In an embodiment of the present disclosure, the group transaction method further comprises:
maintaining, for each transmission node of the one or more transmission nodes in the transmission network, an order in which a corresponding group information is transmitted consistent with an order in which the corresponding group information is received by the designated transmission node.

In an embodiment of the present disclosure, the group transaction method further comprises:
creating a message transmission smart contract on the blockchain network;
for each party in the group and a transmission node at which the party is registered, in response to transmitting, by the party and/or the transmission node at which the party is registered, the group information via the transmission network, submitting, by the party and/or the transmission node at which the party is registered, a digest of the transmitted group information to the message transmission smart contract; and
for each party in the group and a transmission node at which the party is registered, in response to receiving, by the party and/or the transmission node at which the party is registered, the group information via the transmission network, generating, by the party and/or the transmission node at which the party is registered, a receipt acknowledgment based on the digest of the received group information, and submitting, by the party and/or the transmission node at which the party is registered, the receipt acknowledgment to the message transmission smart contract.

In an embodiment of the present disclosure, the group transaction method further comprises:
for each of the plurality of group participants, signing, by the group participant, the corresponding transaction request using a private key of the group participant to generate a first signature, and transmitting the corresponding transaction request carrying the first signature to the group receiver;
receiving, by the group receiver, the corresponding transaction request carrying the first signature, verifying, by the group receiver, the first signature using a public key of the group participant, and publishing, by the group receiver, the corresponding transaction request to the group based on the global consistent ordering in response to successful verification of the first signature by the group receiver; and
obtaining, by the group executor, the corresponding transaction request carrying the first signature that is published to the group, verifying, by the group executor, the first signature on ciphertext of the corresponding transaction request using the public key of the group participant, and executing the corresponding transaction matching program based on the global consistent ordering in response to successful verification of the first signature by the group executor.

In an embodiment of the present disclosure, the group transaction method further comprises:
transmitting, by the group participant, the corresponding transaction request carrying the first signature to a trusted third party;
verifying, by the trusted third party, the first signature on the ciphertext of the corresponding transaction request, and signing, by the trusted third party, the corresponding transaction request using a private key of the trusted third party to generate a second signature in response to successful verification of the first signature by the trusted third party , such that the corresponding transaction request carries both the first signature and the second signature; and
in response to at least one of the group receiver and the group executor obtaining the corresponding transaction request, verifying, by the at least one of the group receiver and the group executor, the second signature on the ciphertext of the corresponding transaction request using a public key of the trusted third party.

In an embodiment of the present disclosure, the group transaction method further comprises:
signing, by the group executor, the transaction matching results using a private key of the group executor to generate a third signature, and transmitting, via the transmission network, the transaction matching results carrying the third signature to the group receiver;
obtaining, by the group receiver, the transaction matching results carrying the third signature, verifying, by the group receiver, the third signature using a public key of the group executor, and publishing the transaction matching results carrying the third signature to the group based on the global consistent ordering in response to successful verification of the third signature by the group receiver; and
obtaining, by the plurality of group participants, the transaction matching results carrying the third signature that are published to the group, and verifying, by the plurality of group participants, the third signature on ciphertexts of the transaction matching results using the public key of the group executor, and performing, by the plurality of group participants, the transaction settlement in response to successful verification of the third signature by the plurality of group participants.

In an embodiment of the present disclosure, the group transaction method further comprises:
creating a trusted smart contract on the blockchain network;
staking, by one or more group participants in the group, trusted credentials in the trusted smart contract; and
configuring the group receiver to receive group information only from group participants that have staked trusted credentials in the trusted smart contract.

In an embodiment of the present disclosure, the group transaction method further comprises:
creating one or more transaction voucher smart contracts on the blockchain network; and
prior to performing the transaction settlement, depositing, by the plurality of group participants, transaction vouchers for the transaction settlement into corresponding transaction voucher smart contracts, and locking the transaction vouchers using a hash time lock, and notifying a counterparty.

In an embodiment of the present disclosure, the group executor is registered at the designated transmission node at which the group receiver is deployed.

In an embodiment of the present disclosure, executing, by the group executor, the transaction matching program based on the global consistent ordering comprises:
stream processing, comprising: in response to receiving each transaction request published to the group, inputting, by the group executor, the transaction request into the transaction matching program in real time to generate a corresponding transaction matching result, and transmitting the generated corresponding transaction matching result to the group receiver in real time.

In an embodiment of the present disclosure, executing, by the group executor, the transaction matching program based on the global consistent ordering comprises:
periodic processing, comprising: inputting, by the group executor, one or more transaction requests published to the group within a time period as a batch into the transaction matching program, and transmitting, by the group executor, generated transaction matching results to the group receiver.

In an embodiment of the present disclosure, for each of the transaction requests, the transaction request comprises source transaction information indicating a transaction demand of a requesting party and target transaction information indicating transaction conditions of a counterparty; and
executing, by the group executor, the transaction matching program comprises performing matching based on the source transaction information of one of at least two transaction requests and the target transaction information of another one of the at least two transaction requests.

In an embodiment of the present disclosure, each of the transaction request further comprises transaction constraint information comprising a validity time of the transaction request and/or a deadline for transaction matching of the transaction request; and
executing, by the group executor, the transaction matching program further comprises verifying whether the transaction constraint information is satisfied.

In an embodiment of the present disclosure, the group transaction method further comprises:
prior to a designated transaction request being successfully matched, receiving, by the group receiver, a transaction cancellation request from a group participant corresponding to the designated transaction request, and removing the designated transaction request from a matching queue.

In an embodiment of the present disclosure, performing the transaction settlement on the blockchain network based on the transaction matching results further comprises:
for each of the plurality of group participants, deploying the transaction matching program at the group participant;
after transmitting, by the group participant, a first transaction request, obtaining, by the group participant, one or more transaction requests published to the group, and inputting, by the group participant, the one or more transaction requests into the transaction matching program to obtain a verification matching result; and
obtaining, by the group participant, a transaction matching result corresponding to the first transaction request that is published to the group, and verifying the transaction matching result corresponding to the first transaction request based on the verification matching result.

In a second aspect, a group transaction system based on a blockchain network is provided and configured to perform the method in the first aspect, the a group transaction system comprises:
a transmission network comprising a plurality of transmission nodes that are in communication connection with one another; and
a blockchain network configured to perform transaction settlement;
wherein the group comprises a plurality of group participants registered with one or more transmission nodes of the transmission network and a group receiver deployed at a designated transmission node of the transmission network, and wherein the plurality of group participants comprise one or more group executors.

In a third aspect, a group transaction apparatus based on a blockchain network is provided and comprises:
at least one processor; and
a memory communicatively coupled to the at least one processor;
wherein the memory stores instructions executable by the at least one processor, and the instructions, when executed by the at least one processor, cause the at least one processor to perform the method in the first aspect.

In a fourth aspect, a computer-readable storage medium is provided. The computer-readable storage medium stores a program which, when executed by a multi-core processor, causes the multi-core processor to perform the method in the first aspect.

One of the advantages of the above embodiments is that an online transaction solution can be provided which balances security and trustworthiness while also achieving low cost and ease of use.

Additional advantages of the present disclosure will be described in further detail in conjunction with the following description and the accompanying drawings.

It should be understood that the foregoing illustrations are merely an overview of the technical solutions of the present disclosure, so as to enable a clearer understanding of the technical means of the present disclosure and to facilitate implementation in accordance with the contents of the specification. In order to make the above and other objectives, features, and advantages of the present disclosure more readily apparent, specific embodiments of the present disclosure are described below by way of examples.

### BRIEF DESCRIPTION OF THE DRAWINGS

Upon reading the following detailed description of exemplary embodiments, those skilled in the art will appreciate the advantages and benefits described herein, as well as other advantages and benefits. The accompanying drawings are provided only for the purpose of illustrating exemplary embodiments and are not to be construed as limiting the protection range of the present disclosure. Throughout the accompanying drawings, identical reference numerals denote identical components.
FIG. 1 is a schematic diagram of a group transaction system based on a blockchain network according to embodiments of the present disclosure.
FIG. 2 is a schematic flow chart of a group transaction method based on a blockchain network according to embodiments of the present disclosure.
FIG. 3 is a schematic diagram illustrating interactions within a group of a group transaction system based on a blockchain network according to embodiments of the present disclosure.
FIG. 4 is another schematic diagram illustrating interactions within a group of a group transaction system based on a blockchain network according to embodiments of the present disclosure.
FIG. 5 is a schematic flow chart of a group transaction method based on a blockchain network according to embodiments of the present disclosure.
FIG. 6 is a schematic diagram illustrating on-chain information recording of a group transaction system based on a blockchain network according to embodiments of the present disclosure.

In the drawings, identical or corresponding reference numerals indicate identical or corresponding parts.

### DETAILED DESCRIPTION OF EMBODIMENTS

The exemplary embodiments of the present disclosure will be described in further detail below with reference to the accompanying drawings. Although exemplary embodiments of the present disclosure are illustrated in the drawings, it should be understood that the present disclosure may be implemented in various forms and should not be limited to the embodiments set forth herein. Rather, these embodiments are provided so that the present disclosure will be more thoroughly understood and will fully convey the scope of the present disclosure to those skilled in the art.

In the description of the embodiments of the present disclosure, it should be understood that terms such as "comprising" or "including" are intended to indicate the presence of stated features, integers, steps, operations, elements, components, or combinations thereof, but do not preclude the presence or addition of one or more other features, numerical values, steps, operations, elements, components, or combinations thereof.

Unless otherwise specified, the symbol "/" represents "or." For example, A/B may represent A or B. The term "and/or" is used merely to describe an association relationship between associated objects and may indicate three possible relationships. For example, A and/or B may represent: A alone, both A and B, or B alone.

Terms such as "first" and "second" are used merely for distinguishing similar or identical technical features and are not to be construed as indicating or implying relative importance or quantity of such features. Accordingly, a feature defined by "first" "second", or the like may explicitly or implicitly include one or more such features. In the embodiments of the present disclosure, unless otherwise specified, the term "plurality" means two or more.

It should further be noted that, in the absence of conflict, the embodiments of the present disclosure and features in the embodiments may be combined with one another. The present disclosure will be described in detail below with reference to the accompanying drawings and the embodiments.

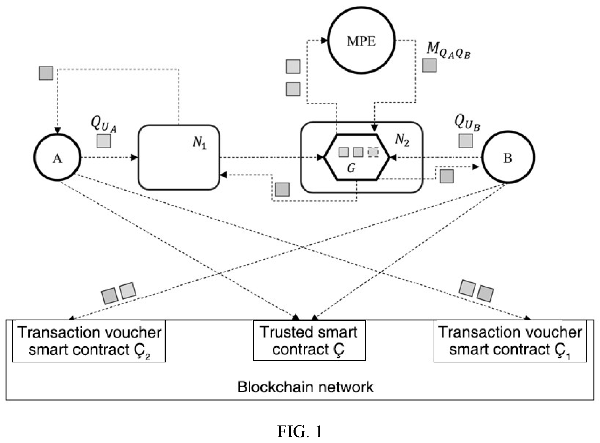

FIG. 1 is a schematic diagram of a group transaction system based on a transmission network according to an embodiment of the present disclosure. The system mainly includes a transmission network N for efficiently and fairly transmitting information, and a blockchain network BT for recording and storing group information. Smart contracts on the blockchain network BT may be used to manage transaction fees.

The transmission network N includes multiple transmission nodes that are in communication connection with one another. Specifically, the transmission network N may be a peer-to-peer transmission network composed of transmission nodes such as N1, N2, and the like, which are responsible for receiving, forwarding, and routing information within the transmission network.

Information stored in the blockchain network BT has characteristics such as being non-forgeable, tamper-resistant, traceable, verifiable, transparent, and collectively maintained. Asset contracts on the blockchain network store transaction vouchers (e.g., tokens) of each group participant for transaction settlement. The blockchain network further stores a transmission node list and a transmitting/receiving address list, where the transmission node list is used to record and publish the address of each transmission node in the transmission network.

The group includes multiple group participants (e.g., A, B, C) registered with one or more transmission nodes (e.g., N1, N2) of the transmission network N, and a group receiver G deployed at a designated transmission node.

The group receiver G is disposed at a designated transmission node of the transmission network N, such as node N2 shown in FIG. 1, and is configured to receive group information transmitted by each group participant (e.g., A, B, C), perform global consistent ordering on the received group information, and subsequently publish the ordered group information to the group.

Each group participant is registered with a transmission node of the transmission network N. For example, group participant A is registered with transmission node N1, and group participants B and C are registered with transmission node N2. Each group participant (e.g., A, B, C) is configured to transmit a transaction request *Q_{U}* to the group receiver G via the transmission network N.

A group executor MPE is one or more of the group participants. For example, group participant C in FIG. 1 serves as a group executor and is registered with transmission node N2. The group executor is configured to obtain, from the group information published to the group by the group receiver G, ordered transaction requests, execute a transaction matching program based on the global consistent ordering to generate transaction matching results, and transmit the transaction matching results to the group receiver G.

Each group participant (e.g., A, B, C) is further configured to obtain the transaction matching results from the group information published to the group by the group receiver G, and perform transaction settlement on the blockchain network BT.

The embodiments of the present disclosure are described below by taking, as an example, a blockchain-based transaction matching method applied to the blockchain-based transaction system shown in FIG. 1.

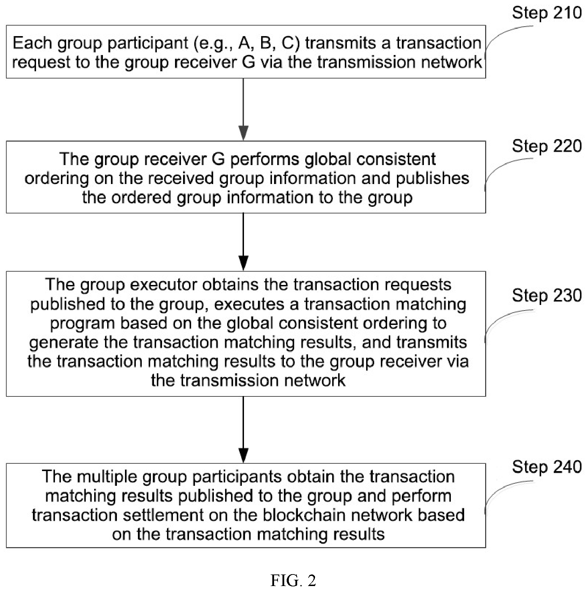

FIG. 2 is a schematic flow chart of a blockchain-based transaction matching method according to an embodiment of the present disclosure. The method may be implemented by one or more electronic devices, or by one or more programs executed on such electronic devices.

As shown in FIG. 2, the method provided in this embodiment may include the following steps.

(Step 210) Each group participant (e.g., A, B, C) transmits a transaction request to the group receiver G via the transmission network.

Each group participant (e.g., A, B, C) stores the address of the group receiver G, so as to transmit the transaction request, via the transmission network, to the designated transmission node at which the group receiver G is deployed.

The transaction request generated by each group participant (e.g., A, B, C) may include: source transaction information indicating a transaction demand of the requesting party, and target transaction information indicating transaction conditions of a counterparty. For example, the source transaction information may include information for indicating the asset and address of the requesting party, such as a contract address of a held asset, an amount of the held asset to be traded, and an address of an asset holder. The target transaction information may include information for indicating the asset and address of the counterparty, such as a contract address of a target transaction asset, an amount of the target transaction asset, and a receiving address of the target transaction asset. The transaction request may further include a unique transaction identifier, as well as transaction constraint information, such as a transaction deadline and a hash time lock.

For example, a transaction request *Q_{U_{A}}* issued by group participant A may include:
unique transaction identifier:
   0x36a3a4c617302067359e8f614058564dcef309b767337343990d03a90d2b24bd
contract address of held asset:
   0x70C78FC35ae0756CA95Bb3D95016edeFbDA8a6A4
amount of held asset to be traded: 800
contract address of target transaction asset:
   0x43cdcb84d6217de595049c762f2687223307e015
amount of target transaction asset: 200
receiving address of target transaction asset:
   0x7ed58b3621fb0b462cf9c21069904d1a08decfdd
transaction deadline: 1695318031464
hash time lock:
   [0x97fc46276c172633607a331542609db1e3da793fca183d594ed5a61803a10792, 1d].

Correspondingly, a transaction request *Q_{U_{B}}* issued by group participant B may include:
unique transaction identifier:
   0x13af62fe9d5dd3d5d83b933d1fb1907c38d170b37119c2eda66b26881e5644f3
contract address of held asset: 0x43cdcb84d6217de595049c762f2687223307e015 amount of held asset to be traded: 200
contract address of target asset:
   0x70C78FC35ae0756CA95Bb3D95016edeFbDA8a6A4
amount of target transaction asset: 800
receiving address of target transaction asset:
   0x6421C9c87F57833b02d33324d2D1A298fA5F96d2
transaction deadline: 1695318051464.

It should be understood that, before or after generating the transaction request, each group participant (e.g., A, B, C) deposits digital assets into a transaction voucher smart contract on the blockchain network, that is, issues the assets. Issuance or holding of assets may be completed at any time point prior to transaction settlement.

(Step 220) The group receiver G performs global consistent ordering on the received group information and publishes the ordered group information to the group.

The group information includes all information transmitted by the group participants (e.g., A, B, C), including transaction requests transmitted by the group participants and transaction matching results transmitted by the group executor MPE.

At the designated transmission node where the group receiver G is deployed, each group participant (e.g., A, B, C) is registered as a recipient of published group information. That is, the group receiver G stores addresses of all group participant at the designated transmission node, such that group information published by the group receiver G to the group can be automatically distributed to each group participant (e.g., A, B, C). In summary, each party within the group can transmit information to the group receiver, and the group information received by the group receiver G can be accessed by each party in the group.

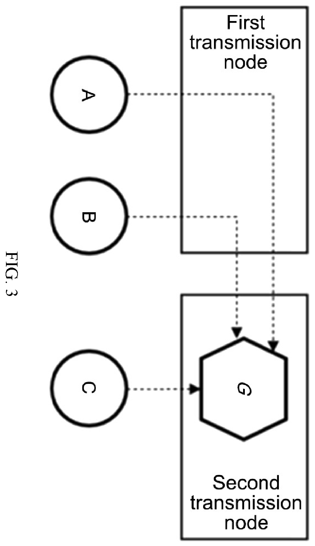

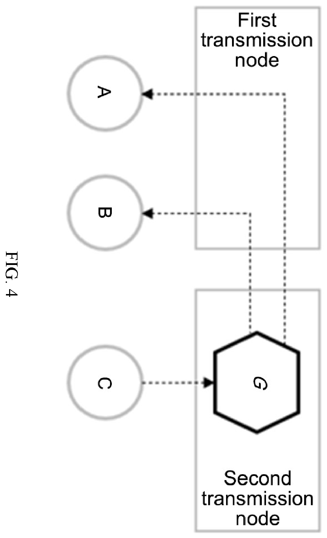

With reference to FIG. 3 and FIG. 4, interactions between the group receiver G and group participants (A, B, C) are described. As shown in FIG. 3, when group participant B transmits information to the group receiver G, group participant B transmits the group information to a second transmission node via a first transmission node. The second transmission node, based on addresses of recipients of published group information registered with the group receiver G, forwards the information transmitted by group participant B to group participant C at the second transmission node and to group participant A at the first transmission node. As shown in FIG. 4, the process by which group participant C transmits information to the group receiver G is similar.

The interaction between the group receiver G and the group participants within the group may rely on a single transmission node (i.e., all group participants are located at the same node) or may multiple transmission nodes (i.e., group participants are distributed across different nodes).

To ensure fairness of transactions, it is necessary to maintain global fairness in the ordering of information within the group. Accordingly, in the embodiments of the present disclosure, the group receiver G is established in the transmission network as a relay channel for group information, responsible for distributing group information and ensuring globally consistent and fair ordering of the group information. The group receiver G sorts received group information according to a global consistent ordering rule agreed upon by all group participants.

(Step 230) The group executor obtains the transaction requests published to the group, executes a transaction matching program based on the global consistent ordering to generate the transaction matching results, and transmits the transaction matching results to the group receiver via the transmission network.

Specifically, the group executor is one of the group participants. Preferably, the group executor is elected by the group participants.

For example, as described above, group participant A issues the transaction request *Q_{U_{A}}*, and group participant B issues the transaction request *Q_{U_{B}}*. Matching may be performed based on source transaction information and target transaction information of at least two transaction requests. It can be seen that the transaction information of *Q_{U_{A}}* and *Q_{U_{B}}* completely matches, and a transaction matching result *M*_{Q*_{A}Q_{B}*} may thus be obtained.

Optionally, when the transaction request includes transaction constraint information, the group executor may first verify whether the transaction constraint information is satisfied, for example, whether the current time satisfies a validity time and/or a deadline for transaction matching of the transaction request. If the transaction constraint information is not satisfied, the matching may be directly rejected.

(Step 240) The multiple group participants obtain the transaction matching results published to the group and perform transaction settlement on the blockchain network based on the transaction matching results.

For example, after obtaining the transaction matching result *M_{Q_{A}Q_{B}}*, group participant A and group participant B may perform transaction settlement on the blockchain network using an atomic swap mechanism.

To achieve transaction settlement on the transmission network, one or more transaction voucher smart contracts may further be created on the blockchain network, such as a transaction voucher smart contract Ç₁ created by group participant A and a transaction voucher smart contract Ç₂ created by group participant B. Prior to performing the transaction settlement, the group participants deposit transaction vouchers for the transaction settlement into the corresponding transaction voucher smart contracts, lock the transaction vouchers using a hash time lock, and notify a counterparty.

In summary, the present disclosure provides a group transaction method that is fair, trustworthy, and easy to use, combining the advantages of fast and fair matching performance of the transmission network with the advantages of traceability, immutability, and strong consensus of the blockchain network. The transmission network enables efficient transmission of group information and fair matching of transaction requests. Transaction participants are not required to directly or indirectly interact with the blockchain network prior to transaction settlement, thereby significantly reducing the learning cost for ordinary users regarding the blockchain network on which the digital assets reside. The use of blockchain technology during the transaction settlement phase ensures asset security.

In one embodiment, at step 220, the group receiver G performs the global consistent ordering on the received group information based on a consistency ordering method that is published to all group participants. It should be understood that the global consistent ordering method is publicly available to all group participants, such that all group participants can verify the ordering based on the method.

In one embodiment, at step 220, the group participants verify the global consistent ordering based on timestamps carried in the group information. The timestamps are generated in the transmission network based on time points at which the group information is transmitted. For example, when a transmission node in the transmission network transmits the group information, the transmission node may attach a timestamp to the group information based on a time point at which the group information is transmitted. It can be understood that the order of the group information after global consistent ordering should correspond to the order indicated by the timestamps, such that group participants can verify the ordered group information published to the group.

In one embodiment, the global consistent ordering at step 220 may include sorting, by the group receiver G, the received group information according to time points at which the group information arrives at the designated transmission node N2.

Optionally, the transmission node with which each group participant is registered may attach a timestamp to the group information based on the time point at which the group information is received from the group participant, such that the group receiver G subsequently sorts the received group information based on the timestamps.

Optionally, the transmission node with which each group participant is registered may upload the received group information to the blockchain network and attach a timestamp to the group information based on an on-chain time point, such that the group receiver G subsequently sorts the received group information based on the timestamps.

It should be understood that various consistency ordering schemes may be used to sort the group information, as long as the global rule is consistent and trustworthy.

Further, when two or more pieces of group information arrive at the designated transmission node at the same time or have identical timestamps, the group receiver G may sort the group information by comparing hash values of the group information. For example, a larger hash value may be ranked earlier.

In another embodiment, performing the global consistent ordering at step 220 may further include: defining, by the group receiver G, a plurality of time periods at intervals of a predetermined duration; for each time period, performing, by the group receiver, a hash computation on all transaction requests arriving at the group receiver within the time period to obtain hash values; and for each time period, performing, by the group receiver, the global consistent ordering on group information received within the time period based on hash values of the transaction requests received within the time period. This approach can reduce the computational workload of sorting.

Optionally, other parameters of the group information may also be compared for sorting purposes, and the present disclosure is not limited thereto.

In one embodiment, to ensure non-discriminatory transmission and reception of information by transmission nodes and to prevent malicious rejection or filtering of information associated with specific addresses, performing the global consistent ordering at step 220 further includes: maintaining, for each transmission node in the transmission network, an order in which a corresponding group information is transmitted consistent with an order in which the corresponding group information is received by the designated transmission node.

For example, when group participant A sequentially transmits information with identifiers (T1, T2, ..., Tn; T1 < T2 < ... < Tn) in a transmitting order to its registered transmission node N1, the designated transmission node N2 at which the group receiver G is located also receives the information in the same order. In summary, transmission nodes may coordinate transmission and reception sequence of information to ensure consistency in the transmission and reception ordering across all transmission nodes.

In one embodiment, in order to ensure that group information transmitted in the transmission network N is not tampered with and to guarantee transaction security, the traceability and immutability characteristics of the blockchain network may be utilized to provide security protection for the transmission process of group information.

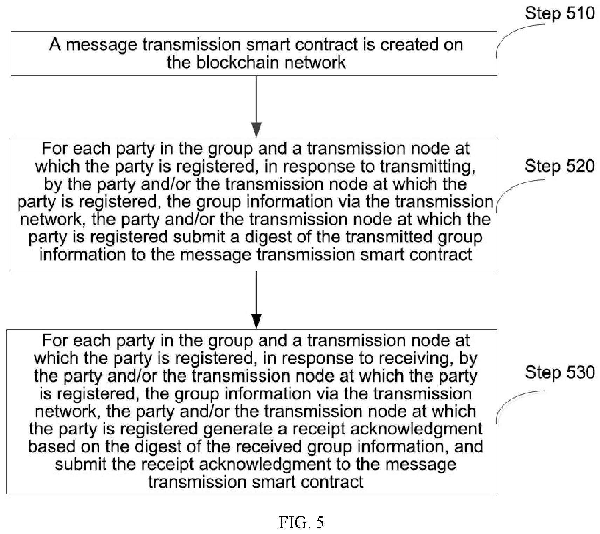

With reference to FIG. 5, the method may further include the following steps.

(Step 510) A message transmission smart contract is created on the blockchain network.

Specifically, the message transmission smart contract may be created on the blockchain network by any party selected from and by the group. Alternatively, the message transmission smart contract may be created by a transaction management party outside the group, and the present disclosure is not limited thereto. The message transmission smart contract is an on-chain smart contract defining a set of digital protocols with specific rules, which are enforceable on-chain when predetermined conditions are satisfied.

(Step 520) For each party in the group and a transmission node at which the party is registered, in response to transmitting, by the party and/or the transmission node at which the party is registered, the group information via the transmission network, the party and/or the transmission node at which the party is registered submit a digest of the transmitted group information to the message transmission smart contract.

Specifically, the parties in the group include all group participants and the group receiver. The transmission nodes at which the parties are registered include the transmission node registered by each group participant as well as the transmission node on which the group receiver is deployed. It should be noted that the group executor is a group participant and therefore also falls within the scope of the parties in the group.

The digest is obtained by performing a hash computation on the group information. The digest of the group information has a relatively small data size, thereby resulting in a lower cost for uploading it to the blockchain network.

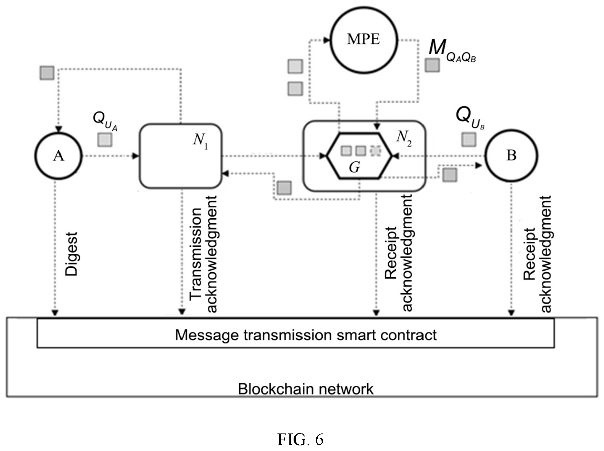

For example, with reference to FIG. 6, which illustrates the message transmission smart contract in the network shown in FIG. 1. During a process in which group participant A transmits a transaction request to the group receiver G, group participant A first uploads the digest of the transaction request to the message transmission smart contract and then transmits the transaction request to transmission node N1. Subsequently, transmission node N1 transmits the transaction request to transmission node N2 via the transmission network N and uploads a transmission acknowledgment to the message transmission smart contract to prove that N1 has completed the information transmission.

(Step 530) For each party in the group and a transmission node at which the party is registered, in response to receiving, by the party and/or the transmission node at which the party is registered, the group information via the transmission network, the party and/or the transmission node at which the party is registered generate a receipt acknowledgment based on the digest of the received group information, and submit the receipt acknowledgment to the message transmission smart contract.

For example, as shown in FIG. 6, after transmission node N2 receives the transaction request transmitted from transmission node N1, transmission node N2 uploads the receipt acknowledgment to the message transmission smart contract on the blockchain network based on the digest of the received group information, thereby proving that transmission node N2 has completed information reception.

In one embodiment, in order to further ensure that group information is not tampered with and to enhance transaction security, steps 210 to 230 may further include the following operations.

Step 210 further includes the following operations. For each group participant, the group participant signs the corresponding transaction request using a private key of the group participant to generate a first signature, and transmits the corresponding transaction request carrying the first signature to the group receiver.

Step 220 further includes the following operations. The group receiver receives the corresponding transaction request carrying the first signature, verifies the first signature using a public key of the group participant, and publishes the corresponding transaction request to the group based on the global consistent ordering in response to successful verification of the first signature by the group receiver.

Step 230 further includes the following operations. The group executor obtains the corresponding transaction request carrying the first signature that is published to the group, verifies the first signature on ciphertext of the corresponding transaction request using the public key of the group participant, and executes the corresponding transaction matching program based on the global consistent ordering in response to successful verification of the first signature by the group executor.

Public keys and private keys of the group participants (A, B, C), the group receiver G, and each transmission node (N1, N2, ...) may be preconfigured. The key pairs may be generated based on asymmetric cryptographic algorithms. The public keys may be published on the blockchain network or shared within the group, and the private keys may be retained by respective parties.

Accordingly, transaction security may be ensured through digital signatures of the respective parties.

Optionally, prior to performing digital signing, the group participant may encrypt the transaction request using the public key of the group executor, such that the transaction request is transmitted in encrypted form within the transmission network and can be decrypted by the group executor using the private key of the group executor.

In one embodiment, in order to further enhance transaction security, a trusted third party may be introduced for verification.

Specifically, after step 210, the group participant transmits the ciphertext of the corresponding transaction request to the trusted third party. The trusted third party verifies the first signature on the ciphertext of the corresponding transaction request using the public key of the group participant. In response to successful verification of the first signature by the trusted third party, the trusted third party signs the corresponding transaction request using a private key of the trusted third party to generate a second signature, such that the ciphertext of the corresponding transaction request carries both the first signature and the second signature. The group participant then uses the ciphertext of the corresponding transaction request carrying both the first signature and the second signature as a complete and valid transaction request, which is transmitted to a group information receiving party by any party in the transmission network.

At steps 220 and 230, in response to at least one of the group receiver and the group executor obtaining the corresponding transaction request, the at least one of the group receiver and the group executor verifies the second signature on the ciphertext of the corresponding transaction request using a public key of the trusted third party.

The public key and the private key of the trusted third party may be preconfigured and generated based on asymmetric cryptographic algorithms. The public key may be published on the blockchain network or shared within the group, while the private key is retained by the trusted third party.

Accordingly, the introduction of the trusted third party signature further enhances transaction security.

In one embodiment, in order to further ensure transaction security, a trusted smart contract may be created on the blockchain network. One or more group participants in the group may stake trusted credentials in the trusted smart contract. The group receiver is configured to receive group information only from group participants that have staked trusted credentials in the trusted smart contract.

For example, as shown in FIG. 1, a trusted smart contract Ç may be created on the blockchain network. Group participants A and B stake trusted credentials, such as tokens of a predetermined amount or trusted identity information, in the trusted smart contract Ç. When receiving group information, the group receiver first checks, via the trusted smart contract Ç , whether the group participant transmitting the group information has staked trusted credentials. If not, the group receiver rejects the group information from that group participant, and the group participant is disqualified from participating in transaction matching.

In one embodiment, in order to ensure that transaction matching results are not tampered with, after generating the transaction matching results, the group executor signs the transaction matching results using a private key of the group executor to generate a third signature, and transmits the transaction matching results carrying the third signature to the group receiver via the transmission network. The group receiver obtains the transaction matching results carrying the third signature, verifies the third signature using a public key of the group executor, and publishes the transaction matching results carrying the third signature to the group based on the global consistent ordering in response to successful verification of the third signature by the group receiver. The group participants obtain the transaction matching results carrying the third signature that are published to the group, verify the third signature on the ciphertext of the transaction matching results using the public key of the group executor, and perform transaction settlement in response to successful verification of the third signature by the group participants.

In one embodiment, in order to shorten transmission paths within the transmission network, the group executor MPE is registered at the designated transmission node at which the group receiver G is deployed.

It can be understood that the group executor MPE continuously obtains transaction requests published by the group receiver and continuously performs transaction matching and transmits transaction matching results to the group receiver G. Since information transmissions between the group executor MPE and the group receiver G are frequent, registering the group executor MPE at the designated transmission node at which the group receiver G is deployed can reduce the number of information transmissions within the transmission network.

In one embodiment, at step 230, the group executor executes the transaction matching program based on the global consistent ordering may include the following two processing modes.

Stream processing, including: in response to receiving each transaction request published to the group, the group executor inputs the transaction request into the transaction matching program in real time to generate a corresponding transaction matching result, and transmits the generated corresponding transaction matching result to the group receiver in real time.

Periodic processing, including: the group executor inputs one or more transaction requests published to the group within a time period as a batch into the transaction matching program, and transmits generated transaction matching results to the group receiver.

For example, assume that group participant A submits a transaction request *Q*_{*At*₀} to the group receiver at time point *t*₀, and group participant B submits a transaction request *Q*_{*Bt*₀} to the group receiver at the same time point *t*₀. The transaction requests *Q*_{*At*₀} and *Q*_{*Bt*₀} are exactly matched, thereby generating a transaction matching result *M*_{*C*1}. Further assume that group participant A submits a transaction request *Q*_{*At*₁} to the group receiver at time point *t*₁, and group participant C submits a transaction request *Q*_{*Ct*₂} to the group receiver at time point *t*₂, where *Q*_{*At*₁} and *Q*_{*Ct*₂} are exactly matched, thereby generating a transaction matching result *M*_{*C*2}. Let *Δt* = *t*₂ - *t*₀. The following are examples of valid group information orderings within the group.
Stream processing: {*Q*_{*At*₀}, *Q*_{*Bt*₀}*, M*_{*C*1}, *Q*_{*At*₁}, *Q*_{*Ct*₂}, *M_{C2}*}, or {*Q*_{*At*₀}*, Q*_{*Bt*₀}*, Q*_{*At*₁}, *M*_{*C*1}*, Q*_{*Ct*₂}*, M*_{C2}}, or {*Q*_{*At*₀}*, Q*_{*Bt*₀}*, Q*_{*At*₁}, *Q_{Ct₂}*, *M*_{C1}, *M*_{*C*2}};
Periodic processing: {*Q*_{*At*₀}*, Q*_{*Bt*₀}, *Q*_{*At*₁}, *Q*_{*Ct*₂}, *M*_{*C*1}, *M_{C2}*}.

In one embodiment, step 230 may further include the following operations. Prior to a designated transaction request being successfully matched, the group receiver receives a transaction cancellation request from a group participant corresponding to the designated transaction request, and removes the designated transaction request from a matching queue.

In one embodiment, at step 240, performing the transaction settlement based on the transaction matching result on the transmission network may further include the following operations.
for each group participant, the transaction matching program is deployed at the group participant;
after transmitting a first transaction request, the group participant obtains one or more transaction requests published to the group, and inputs the one or more transaction requests into the transaction matching program to obtain a verification matching result; and
the group participant obtains a transaction matching result corresponding to the first transaction request that is published to the group, and verifies the transaction matching result corresponding to the first transaction request based on the verification matching result.

At step 240, performing the transaction settlement based on the transaction matching result on the transmission network may further include the following atomic swap process.
(1) When group participants A and B perform a transaction, group participant A generates a hash time lock *HTL* = (*h, T*), where *h* = *Hash*(*s*), and locks *a* units of asset *$X* held by group participant A in contract Ç₁ using the hash time lock;
(2) Group participant A transmits the hash time lock to group participant B. Group participant B may query and verify the locked amount of HTL of group participant A in contract Ç₁, and subsequently locks b units of asset *$Y* held by group participant B in contract Ç₂ using the same hash time lock, and notifies group participant A;
(3) Before the time point *T,* group participant A uses (s*, M_{Q_{AB}}*) to withdraw the b units of asset *$Y* locked by group participant B in contract Ç₂, thereby disclosing s;
(4) Before the time point *T,* group participant Buses (*s,M_{Q_{A}Q_{B}}*) to withdraw the *a* units of asset *$X* locked by group participant A in contract Ç₁, thereby completing the transaction.

For ease of understanding, a specific example of the present disclosure is described with reference to FIG. 1. However, it should be understood that the embodiments of the present disclosure are not limited thereto.
(a) Group participants A and B respectively hold different crypto assets, namely *a* units of asset *$X* and *b* units of asset *$Y,* in different transaction voucher smart contracts Ç₁ and Ç₂, respectively, or alternatively in a single contract.
(b) Group participants A and B each stake trusted credentials, for example, 10 USDT, in a trusted smart contract Ç.
(c) Group participants A and B each sign their respective transaction requests using their asset management private keys and define transaction constraint information, including that the transaction requests are valid before the time point *T* and that matching must be completed before a time point *T - t,* thereby generating transaction requests *Q_{U_{A}}* and *Q_{U_{B}}.*
(d) Group participants A and B respectively transmit the transaction requests *Q_{U_{A}} and Q_{U_{B}}* to a predetermined group receiver G via the transmission network N. Due to characteristics of the transmission network N, *Q_{U_{A}}* and *Q_{U_{B}}* arrive in accordance with their transmission order. That is, if ${t}_{{Q}_{{U}_{A}}} < {t}_{{Q}_{{U}_{B}}}$*,* then all parties associated with the predetermined group receiver G receive the transaction requests in an order that preserves ${t}_{{Q}_{{U}_{A}}} < {t}_{{Q}_{{U}_{B}}}$*.*
(e) The group receiver G may be configured such that the group executor MPE serves as an execution entity of a transaction matching program P. The group receiver G may be further configured such that only group participants that have staked trusted credentials in the trusted smart contract Ç are permitted to transmit information to the group receiver G.
(f) The group executor MPE sequentially inputs *Q_{_{A}}* and *Q_{U_{B}}* into the transaction matching program P. The transaction matching program P determines whether transaction constraints, including a validity time of the transaction request and a deadline for transaction matching of the transaction request, are satisfied, and, when satisfied, outputs a transaction matching result *M_{Q_{A}Q_{B}}.* The group executor MPE signs the transaction matching result using its asset management private key and transmits the signed transaction matching result to the group receiver G via the transmission network N.
(g) All group participants, including group participants A and B, upon receiving the transaction matching result *M_{_{A}Q_{B}},* verify a signature of the group executor MPE, and re-execute the transaction matching program P using all ordered transaction requests preceding the transaction matching result *M_{Q_{A}Q_{B}}* to reproduce a matching result, and determine whether the reproduced matching result matches the transaction matching result *M_{Q_{A}Q_{B}}.*
(h) If the transaction matching result is verified as valid, group participants A and B may complete a transaction of *a* units of asset *$X* and b units of asset *$Y* using an atomic swap mechanism in accordance with the transaction matching result *M_{_{A}Q_{B}}.*
(i) The transaction voucher smart contracts Ç₁ and Ç₂ may be further configured such that, when a transaction is executed in accordance with the transaction matching result *M_{Q_{A}Q_{B}},* group participants A and B may selectively release staked collateral in the trusted smart contract Ç. For example, if group participant A elects to release the collateral, after withdrawing asset *$Y* from contract Ç₂, contract Ç₂ automatically invokes a collateral release function of the trusted smart contract Ç to release the staked collateral of group participant A.

The embodiments of the present disclosure may be widely applied to various online transaction scenarios of digital assets, including but not limited to the following representative examples.
(1) Trading of crypto assets: the embodiments of the present disclosure may be applied to transactions of various crypto assets on a single blockchain and also support cross-chain asset transactions. Assets conforming to various crypto asset standards, including ERC-20, ERC-721 (NFT), ERC-1155, and the like, may be traded according to the method of the present disclosure after being deposited into the transaction voucher smart contract described herein. Transaction participants stake assets in a contract agreed upon by the participants within the group, such as the transaction voucher smart contract described above.
(2) Transaction scenarios involving traditional financial assets and crypto assets: the embodiments of the present disclosure enable efficient transactions between traditional financial assets and crypto assets. Taking fiat currency as an example, a bank may be introduced as a trusted third party to issue, in an on-chain smart contract, tokens corresponding to debited customer accounts, and to lock corresponding fiat assets in the debited customer accounts. That is, the bank uses its credit and the fiat assets of the debited customer as collateral, such that the debited customer may, within a system based on the method of the present disclosure, trade tokens representing fiat assets with other digital assets. Similarly, the method is applicable to transactions involving traditional financial instruments such as stocks, options, and bonds.
(3) Commodity trading scenarios: the embodiments of the present disclosure enable efficient transactions between commodities and crypto assets or between commodities, and can be applied to general commodity trade, bulk commodity trading, futures trading, and the like. For example, a standardized supervised warehouse may act as a trusted third party to issue, via an on-chain smart contract, tokens corresponding to commodities owned by a commodity owner, and to lock a corresponding quantity of commodities in the warehouse. That is, the warehouse uses its credit and the locked commodities as collateral, such that the commodity owner may, within the system based on the present disclosure, trade commodities with other digital assets.
(4) Transaction scenarios of standardized virtual products: the embodiments of the present disclosure enable efficient transactions of virtual products, digital rights, digital products, digital assets, and virtual assets (such as in-game items, digital vouchers, digital cards, digital copyrights, audio/video media files, and algorithms) with other digital assets. A platform provider or issuer of the virtual products may serve as a trusted third party and provide guarantees for virtual product owners on its platform by staking digital assets. The virtual product owners may, within the system based on the present disclosure, trade virtual products with other digital assets.

In the description of the present specification, references to terms such as "some possible embodiments," "some embodiments," "examples," "specific examples," or "some examples" are intended to indicate that the specific features, structures, materials, or characteristics described in connection with the embodiment or example are included in at least one embodiment or example of the present disclosure, and such terms do not necessarily refer to the same embodiment or example. Furthermore, the specific features, structures, materials, or characteristics described herein may be combined in any suitable manner in one or more embodiments or examples. In addition, those skilled in the art may combine and integrate different embodiments or examples and features thereof described in this specification, provided that such combinations are not mutually inconsistent.

With respect to flow charts of the methods in the embodiments of the present disclosure, certain operations are described as being performed in a particular sequence of steps. Such flow charts are illustrative rather than limiting. Some steps described herein may be grouped and performed in a single operation, or certain steps may be divided into multiple sub-steps, and some steps may be performed in an order different from that shown herein. The steps illustrated in the flow charts may be implemented in any suitable manner by any circuit structure and/or tangible mechanism, including, for example, software executed on a computing device, hardware (such as logic functions implemented by a processor or chip), and/or any combination thereof.

Those skilled in the art will appreciate that, in the methods described in the above embodiments, the sequence in which the steps are described does not necessarily imply a strict execution order, and the specific execution order of the steps should be determined according to their functions and possible inherent logical relationships.

According to some embodiments of the present disclosure, FIG. 1 illustrates a group transaction system based on a blockchain network based on a transmission network, configured to perform the group transaction method described in the above embodiments.

The system mainly includes a transmission network N for efficiently and fairly transmitting information, and a blockchain network BT for recording and storing group information. Smart contracts on the blockchain network BT may be used to manage transaction fees.

The transmission network N includes multiple transmission nodes that are in communication connection with one another. Specifically, the transmission network N may be a peer-to-peer transmission network composed of transmission nodes such as N1, N2, and the like, which are responsible for receiving, forwarding, and routing information within the transmission network.

Information stored in the blockchain network BT has characteristics such as being non-forgeable, tamper-resistant, traceable, verifiable, transparent, and collectively maintained. Asset contracts on the blockchain network store transaction vouchers (e.g., tokens) of each group participant for transaction settlement. The blockchain network further stores a transmission node list and a transmitting/receiving address list, where the transmission node list is used to record and publish the address of each transmission node in the transmission network.

The group includes multiple group participants (e.g., A, B, C) registered with one or more transmission nodes (e.g., N1, N2) of the transmission network N, and a group receiver G deployed at a designated transmission node.

The group receiver G is disposed at a designated transmission node of the transmission network N, such as node N2 shown in FIG. 1, and is configured to receive group information transmitted by each group participant (e.g., A, B, C), perform global consistent ordering on the received group information, and subsequently publish the ordered group information to the group.

Each group participant is registered with a transmission node of the transmission network N. For example, group participant A is registered with transmission node N1, and group participants B and C are registered with transmission node N2. Each group participant (e.g., A, B, C) is configured to transmit a transaction request *Q_{U}* to the group receiver G via the transmission network N.

A group executor MPE is one or more of the group participants. For example, group participant C in FIG. 1 serves as a group executor and is registered with transmission node N2. The group executor is configured to obtain, from the group information published to the group by the group receiver G, ordered transaction requests, execute a transaction matching program based on the global consistent ordering to generate transaction matching results, and transmit the transaction matching results to the group receiver G.

Each group participant (e.g., A, B, C) is further configured to obtain the transaction matching results from the group information published to the group by the group receiver G, and perform transaction settlement on the blockchain network BT.

According to some embodiments of the present disclosure, a group transaction apparatus based on a blockchain network is provided for performing the group transaction method shown in FIG. 2. The apparatus includes at least one processor and a memory communicatively coupled to the at least one processor, where the memory stores instructions executable by the at least one processor, and the instructions, when executed by the at least one processor, cause the at least one processor to perform the method described in the above embodiments.

According to some embodiments of the present disclosure, a non-transitory computer-readable storage medium for the group transaction method based on a blockchain network is provided. The non-transitory computer-readable storage medium stores computer-executable instructions which, when executed by a processor, cause the processor to perform the method described in the above embodiments.

The computer-readable medium may include both non-volatile and volatile, removable and non-removable media implemented by any method or technology for storing information. The information may include computer-readable instructions, data structures, program modules, or other data. Examples of computer-readable storage media include, but are not limited to, phase-change memory (PRAM), static random-access memory (SRAM), dynamic random-access memory (DRAM), other types of random-access memory, read-only memory (ROM), electrically erasable programmable read-only memory (EEPROM), flash memory or other memory technologies, CD-ROM, digital versatile discs (DVD) or other optical storage, magnetic cassettes, magnetic tape, magnetic disk storage, or other magnetic storage devices, or any other non-transitory medium capable of storing information accessible by a computing device. In addition, although operations of the methods of the present disclosure are described in a specific order with reference to the accompanying drawings, this does not require or imply that the operations must be performed in that specific order or that all illustrated operations must be performed to achieve the desired results. In some embodiments, some steps may be omitted, multiple steps may be combined into a single step, and/or a step may be divided into multiple sub-steps.

Although the spirit and principles of the present disclosure have been described above with reference to several specific embodiments, it should be understood that the present disclosure is not limited to the disclosed embodiments. The division of various aspects herein does not imply that features in different aspects cannot be combined. The present disclosure is intended to cover various modifications and equivalent arrangements falling within the spirit and scope of the appended claims.

## Claims

1. A group transaction method based on a blockchain network, a group comprising a plurality of group participants registered with one or more transmission nodes of a transmission network, and a group receiver deployed at a designated transmission node of the transmission network, and the group transaction method comprising:
transmitting, by the plurality of group participants, transaction requests to the group receiver via the transmission network;
performing, by the group receiver, global consistent ordering on group information received by the group receiver, and publishing, by the group receiver, the group information to the group based on a global consistent ordering, wherein the group information comprises the transaction requests and transaction matching results;
obtaining, by a group executor among the plurality of group participants, the transaction requests published to the group, executing, by the group executor, a transaction matching program based on the global consistent ordering to generate the transaction matching results, and transmitting, by the group executor, the transaction matching results to the group receiver via the transmission network; and
obtaining, by the plurality of group participants, the transaction matching results published to the group, and performing, by the plurality of group participants, transaction settlement on the blockchain network based on the transaction matching results.

2. The group transaction method according to claim 1, **characterized in that** performing, by the group receiver, the global consistent ordering on the group information comprises:
performing, by the group receiver, the global consistent ordering on the group information based on a consistency ordering method that is published to all of the plurality of group participants.

3. The group transaction method according to claim 1, further comprising:
verifying, by the plurality of group participants, the global consistent ordering based on timestamps carried in the group information;
wherein the timestamps are generated in the transmission network based on time points at which the group information is transmitted.

4. The group transaction method according to claim 1, **characterized in that** performing, by the group receiver, the global consistent ordering on the group information comprises:
sorting, by the group receiver, the received group information according to time points at which the group information arrives at the designated transmission node.

5. The group transaction method according to claim 4, **characterized in that** performing, by the group receiver, the global consistent ordering on the group information further comprises:
in response to the time points at which the group information arrives at the designated transmission node being identical, sorting, by the group receiver, the group information by comparing hash values of the group information.

6. The group transaction method according to claim 1, **characterized in that** performing, by the group receiver, the global consistent ordering on the group information further comprises:
defining, by the group receiver, a plurality of time periods at intervals of a predetermined duration;
for each of the plurality of time periods, performing, by the group receiver, a hash computation on all transaction requests arriving at the group receiver within the time period to obtain hash values; and
for each of the plurality of time periods, performing, by the group receiver, the global consistent ordering on group information received within the time period based on hash values of the transaction requests received within the time period.

7. The group transaction method according to claim 1, further comprising:
maintaining, for each transmission node of the one or more transmission nodes in the transmission network, an order in which a corresponding group information is transmitted consistent with an order in which the corresponding group information is received by the designated transmission node.

8. The group transaction method according to claim 1, further comprising:
creating a message transmission smart contract on the blockchain network;
for each party in the group and a transmission node at which the party is registered, in response to transmitting, by the party and/or the transmission node at which the party is registered, the group information via the transmission network, submitting, by the party and/or the transmission node at which the party is registered, a digest of the transmitted group information to the message transmission smart contract; and
for each party in the group and a transmission node at which the party is registered, in response to receiving, by the party and/or the transmission node at which the party is registered, the group information via the transmission network, generating, by the party and/or the transmission node at which the party is registered, a receipt acknowledgment based on the digest of the received group information, and submitting, by the party and/or the transmission node at which the party is registered, the receipt acknowledgment to the message transmission smart contract.

9. The group transaction method according to claim 1, further comprising:
for each of the plurality of group participants, signing, by the group participant, the corresponding transaction request using a private key of the group participant to generate a first signature, and transmitting the corresponding transaction request carrying the first signature to the group receiver;
receiving, by the group receiver, the corresponding transaction request carrying the first signature, verifying, by the group receiver, the first signature using a public key of the group participant, and publishing, by the group receiver, the corresponding transaction request to the group based on the global consistent ordering in response to successful verification of the first signature by the group receiver; and
obtaining, by the group executor, the corresponding transaction request carrying the first signature that is published to the group, verifying, by the group executor, the first signature on ciphertext of the corresponding transaction request using the public key of the group participant, and executing the corresponding transaction matching program based on the global consistent ordering in response to successful verification of the first signature by the group executor.

10. The group transaction method according to claim 9, further comprising:
transmitting, by the group participant, the corresponding transaction request carrying the first signature to a trusted third party;
verifying, by the trusted third party, the first signature on the ciphertext of the corresponding transaction request, and signing, by the trusted third party, the corresponding transaction request using a private key of the trusted third party to generate a second signature in response to successful verification of the first signature by the trusted third party , such that the corresponding transaction request carries both the first signature and the second signature; and
in response to at least one of the group receiver and the group executor obtaining the corresponding transaction request, verifying, by the at least one of the group receiver and the group executor, the second signature on the ciphertext of the corresponding transaction request using a public key of the trusted third party.

11. The group transaction method according to claim 1, further comprising:
signing, by the group executor, the transaction matching results using a private key of the group executor to generate a third signature, and transmitting, via the transmission network, the transaction matching results carrying the third signature to the group receiver;
obtaining, by the group receiver, the transaction matching results carrying the third signature, verifying, by the group receiver, the third signature using a public key of the group executor, and publishing the transaction matching results carrying the third signature to the group based on the global consistent ordering in response to successful verification of the third signature by the group receiver; and
obtaining, by the plurality of group participants, the transaction matching results carrying the third signature that are published to the group, and verifying, by the plurality of group participants, the third signature on ciphertexts of the transaction matching results using the public key of the group executor, and performing, by the plurality of group participants, the transaction settlement in response to successful verification of the third signature by the plurality of group participants.

12. The group transaction method according to claim 1, further comprising:
creating a trusted smart contract on the blockchain network;
staking, by one or more group participants in the group, trusted credentials in the trusted smart contract; and
configuring the group receiver to receive group information only from group participants that have staked trusted credentials in the trusted smart contract.

13. The group transaction method according to claim 1, further comprising:
creating one or more transaction voucher smart contracts on the blockchain network; and
prior to performing the transaction settlement, depositing, by the plurality of group participants, transaction vouchers for the transaction settlement into corresponding transaction voucher smart contracts, and locking the transaction vouchers using a hash time lock, and notifying a counterparty.

14. The group transaction method according to claim 1, **characterized in that** the group executor is registered at the designated transmission node at which the group receiver is deployed.

15. The group transaction method according to claim 4 or 5, **characterized in that** executing, by the group executor, the transaction matching program based on the global consistent ordering comprises:
stream processing, comprising: in response to receiving each transaction request published to the group, inputting, by the group executor, the transaction request into the transaction matching program in real time to generate a corresponding transaction matching result, and transmitting the generated corresponding transaction matching result to the group receiver in real time.

16. The group transaction method according to claim 6, **characterized in that** executing, by the group executor, the transaction matching program based on the global consistent ordering comprises:
periodic processing, comprising: inputting, by the group executor, one or more transaction requests published to the group within a time period as a batch into the transaction matching program, and transmitting, by the group executor, generated transaction matching results to the group receiver.

17. The group transaction method according to claim 1, **characterized in that**
for each of the transaction requests, the transaction request comprises source transaction information indicating a transaction demand of a requesting party and target transaction information indicating transaction conditions of a counterparty; and
executing, by the group executor, the transaction matching program comprises performing matching based on the source transaction information of one of at least two transaction requests and the target transaction information of another one of the at least two transaction requests.

18. The group transaction method according to claim 1, **characterized in that**
each of the transaction request further comprises transaction constraint information comprising a validity time of the transaction request and/or a deadline for transaction matching of the transaction request; and
executing, by the group executor, the transaction matching program further comprises verifying whether the transaction constraint information is satisfied.

19. The group transaction method according to claim 1, further comprising:
prior to a designated transaction request being successfully matched, receiving, by the group receiver, a transaction cancellation request from a group participant corresponding to the designated transaction request, and removing the designated transaction request from a matching queue.

20. The group transaction method according to claim 1, **characterized in that** performing the transaction settlement on the blockchain network based on the transaction matching results further comprises:
for each of the plurality of group participants, deploying the transaction matching program at the group participant;
after transmitting, by the group participant, a first transaction request, obtaining, by the group participant, one or more transaction requests published to the group, and inputting, by the group participant, the one or more transaction requests into the transaction matching program to obtain a verification matching result; and
obtaining, by the group participant, a transaction matching result corresponding to the first transaction request that is published to the group, and verifying the transaction matching result corresponding to the first transaction request based on the verification matching result.

21. A group transaction system based on a blockchain network, the group transaction system being configured to perform the method according to any one of claims 1-20, and comprising:
a transmission network comprising a plurality of transmission nodes that are in communication connection with one another; and
a blockchain network configured to perform transaction settlement;
wherein the group comprises a plurality of group participants registered with one or more transmission nodes of the transmission network and a group receiver deployed at a designated transmission node of the transmission network, and wherein the plurality of group participants comprise one or more group executors.

22. A group transaction apparatus based on a blockchain network, comprising:
at least one processor; and
a memory communicatively coupled to the at least one processor;
wherein the memory stores instructions executable by the at least one processor, and the instructions, when executed by the at least one processor, cause the at least one processor to perform the method according to any one of claims 1-20.

23. A computer-readable storage medium storing a program which, when executed by a multi-core processor, causes the multi-core processor to perform the method according to any one of claims 1-20.
